(19) Europäisches Patentamt / European Patent Office / Office européen des brevets

(11) **EP 4 260 524 B1**

(12) **EUROPÄISCHE PATENTSCHRIFT**

(45) Veröffentlichungstag und Bekanntmachung des Hinweises auf die Patenterteilung:
**08.07.2026 Patentblatt 2026/28**

(21) Anmeldenummer: **21830941.7**

(22) Anmeldetag: **30.11.2021**

(51) Internationale Patentklassifikation (IPC):
*H04L 12/40* *(2006.01)*

(52) Gemeinsame Patentklassifikation (CPC):
**H04L 12/40156; H04L 12/40019;** H04L 2012/4026;
H04L 2012/40273

(86) Internationale Anmeldenummer:
**PCT/DE2021/200228**

(87) Internationale Veröffentlichungsnummer:
**WO 2022/122093 (16.06.2022 Gazette 2022/24)**

(54) **VERFAHREN ZUR OPTIMIERUNG DER ÜBERTRAGUNGSDATENRATE IN EINEM SENSORNETZWERK IM TEILNETZBETRIEB IN EINEM ETHERNETNETZWERK**

METHOD FOR OPTIMIZING THE TRANSFER DATA RATE IN A SENSOR NETWORK IN PARTIAL NETWORK OPERATION IN AN ETHERNET NETWORK

PROCÉDÉ POUR OPTIMISER LE DÉBIT DE DONNÉES DE TRANSMISSION DANS UN RÉSEAU DE DÉTECTION DANS UN FONCTIONNEMENT DE RÉSEAU PARTIEL DANS UN RÉSEAU ETHERNET

(84) Benannte Vertragsstaaten:
**AL AT BE BG CH CY CZ DE DK EE ES FI FR GB GR HR HU IE IS IT LI LT LU LV MC MK MT NL NO PL PT RO RS SE SI SK SM TR**

(30) Priorität: **11.12.2020 DE 102020215763**

(43) Veröffentlichungstag der Anmeldung:
**18.10.2023 Patentblatt 2023/42**

(73) Patentinhaber: **AUMOVIO Germany GmbH 60488 Frankfurt am Main (DE)**

(72) Erfinder:
• ZINNER, Helge
  **60488 Frankfurt am Main (DE)**
• HOPF, Daniel
  **60488 Frankfurt am Main (DE)**

(74) Vertreter: **Aumovio Corporation AUMOVIO Germany GmbH Taunusstraße 36 80807 München (DE)**

(56) Entgegenhaltungen:
DE-A1- 102006 003 067   DE-A1- 102011 085 764
US-A1- 2020 136 993

## EP 4 260 524 B1

**Beschreibung**

FELD

Die vorliegende Erfindung betrifft ein Verfahren zur Optimierung der Übertragungsdatenrate in einem Sensornetzwerke im Teilnetzbetrieb innerhalb eines Ethernet-Bordnetzwerks in einem Kraftfahrzeug, ein Steuergerät und ein Ethernet-Bordnetzwerk

STAND DER TECHNIK

Mit 10 Mbit/s (IEEE802.3ch) wird neben 100 Mbit/s; 1000 Mbit/s und den laufenden Multi-Gigabit-Standardisierungen ein weiterer Ethernet-Standard für Automotive Anwendungen zur Verfügung stehen.

Eine Variante des neuen Standards ist der auf CSMA/CD basierende MultiDrop-Modus. Dieser unterscheidet sich deutlich von den anderen Ethernet-Varianten (>10 Mbit/s), da mit diesem das Ziel verfolgt wird Ethernet kostengünstiger auslegen zu können und damit auch einfachere Steuergeräte zu adressieren. Dieser Standard benötigt keine Switches (Switch ICs), sondern wird als Bus (ähnlich zum CAN) ausgelegt. Dadurch halbiert sich ca. die Anzahl der notwendigen PHYs (Transceiver). Somit wird Ethernet eine ernsthafte Konkurrenz zu CAN/CAN-FD und FlexRay, da hiermit die Systemkosten deutlich gesenkt werden. Weiterhin sind auch typische Automotive-Schnittstellen wie SPI statt xMII zur Kommunikation zwischen Controllern und Physical Transceivern (PHYs) möglich.

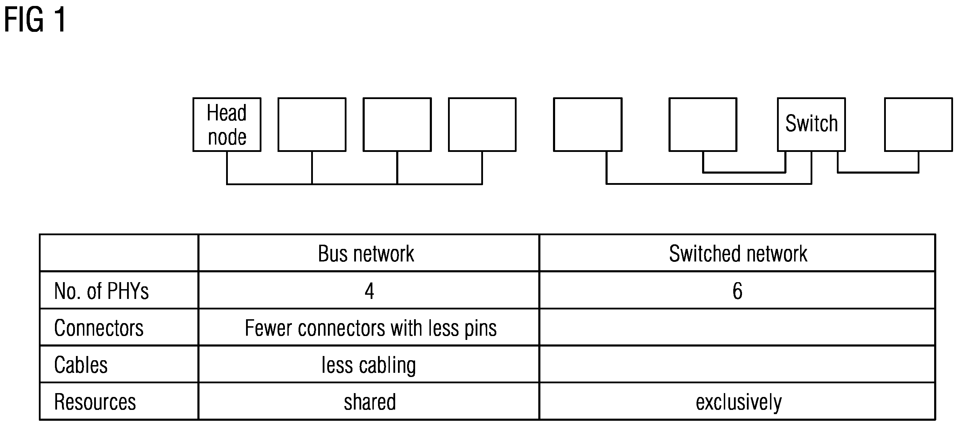

Fig.1 stellt die wesentlichen Merkmale von Switched Ethernet und dem "Bus-Ethernet" (MultiDrop) wie es im IEEE-Standard IEEE P802.3cg definiert wird gegenüber. Der wichtigste Unterschied ist dabei, dass die Ressourcen, der Buszugriff, bei Switched Ethernet exklusiv zur Verfügung stehen, was bedeutet das jeder Ethernet-Knoten (ECU) jederzeit senden darf, ohne dass dabei Kollisionen auftreten. Beim der neuen Ethernet Bus-Umsetzung mit Multi-Drop-Mode wird ein geteiltes Medium ("shared media") verwendet, d.h. es muss mit dem Buszugriff gewartet werden bis diese Ressource zur Verfügung steht.

Der Standard IEEE P802.3cg verwendet unter anderem einen neu definierten Mechanismus (PLCA - Physical Layer Collision Avoidance), um Kollisionen beim Buszugriff zu vermeiden und einen fairen Zugriff zu realisieren. Dabei erhält immer nur genau ein PHY (Physical Transceiver) zu genau einem Zeitpunkt Zugriff auf den Bus. Hierdurch kann es nicht zu Kollisionen kommen. Der Zugriff wird nach einem sog. Round Robin-Verfahren gestaltet. Jede ECU (Knoten) am BUS bekommt die Möglichkeit einmal innerhalb eines definierten Zyklus (bzw. Reihenfolge) zu senden.

Ein sogenannter Headnode, der die Funktion eines Netzwerkcontrollers übernimmt, bestimmt dabei den Zyklus und sendet wiederkehrend "Beacons" auf dem Bus. Damit starten die Knoten in Abhängigkeit ihrer vorher definierten Identität ID, die bestimmt die Reihenfolgen wann Sie senden dürfen, einen Timer und nach Ablauf dessen und der Erkennung, das Sie an der Reihe sind, dürfen Sie senden.

Fig. 2 stellt den prinzipiellen Ablauf der Kommunikation am Ethernet-Bus. Nach Aussendung des Beacons ist erst Knoten 0 an der Reihe und wenn dieser seine Übertragung beendet hat darf der nächste Knoten senden (typischerweise darf im Slot jeweils nur ein einzelner Ethernet-Frame gesendet werden).

Fig. 3 stellt die physische Darstellung des Ethernet-Busses mit Stubs dar.

EP 2 585 940 A1 beschreibt ein Systeme und Verfahren zum Planen der Netzwerkkommunikation in einem verwalteten Netzwerk können einen Netzwerkcontroller umfassen, der mehrere Netzwerkknoten erkennt; der Netzwerkcontroller klassifiziert die erkannten Netzwerkknoten in zwei oder mehr Klassifikationen von Knoten zur Priorisierung der Netzwerkkommunikation auf Knotenebene; den Netzwerkcontroller, der Reservierungsanforderungen von mindestens einem Teil der Vielzahl von Netzwerkknoten empfängt, wobei die Reservierungsanforderungen einen oder mehrere Zeitschlitze für ihre jeweiligen Netzwerkknoten in einem bevorstehenden Kommunikationsfenster anfordern; und die Netzwerksteuerung weist einem oder mehreren Netzwerkknoten als Antwort auf Reservierungsanforderungen Zeitschlitze in dem bevorstehenden Kommunikationsfenster zu, wobei die Zuweisung auf einer Priorität der Netzwerkknoten basiert und wobei die Priorität den Knoten gemäß ihrer Klassifizierung zugewiesen wird. Diese Patentanmeldung beschreibt, dass ein Netzwerkcontroller für einen zyklischen Media Access Plan (MAP) erstellt, in dem die Zugriffe der Netzwerkknoten in jedem Zyklus festgelegt werden. Basis ist die erforderliche Dienstgüte, die Reservierungsanfragen der jeweiligen Knoten sowie deren Priorität/Unterpriorität, aus denen der Netzwerkcontroller den MAP erstellt. Der Netzwerkcontroller kann auch ohne Reservierungsanfragen selbsttätig MAP-Nachrichten versenden.

DE 102011085764 A1 offenbart ein Verfahren zum Betreiben einer Busanordnung, die als Knoten einen Master und k Slaves umfasst, bei dem von dem Master an die Slaves ein Header (85) eines Abfragerahmens, der k Informationsfelder umfasst, übermittelt wird, wobei jeweils einem m-ten Slave ein m-tes Informationsfeld zugeordnet wird, wobei von dem m-ten Slave in das ihm zugeordnete m-te Informationsfeld eine Information darüber geschrieben wird, welche Menge an Daten von dem m-ten Slave an den Master zu versenden sind, wobei der Abfragerahmen an den Master übermittelt wird, und wobei von dem Master zur Übermittlung der Daten ein zeitlicher Ablaufplan, mit dem die Menge der zu versendenden Daten berücksichtigt wird, bereitgestellt wird.

DE 102006003067 A1 offenbart ein Verfahren zur dynamischen Ressourcen-Zuweisung in einem Kommunikationssystem wird für den Zugriff von Kommunikationsknoten ein zyklischer Zeitrahmen von zumindest zeitweise fester zeitlicher Dauer vorgegeben, wobei Zeitschlitze in dem Zeitrahmen den Kommunikationsknoten zugeteilt werden. Ungenutzte Zeitschlitze werden in ihrer Dauer verkürzt, wodurch zusätzliche Zeitschlitze in dem Zeitrahmen untergebracht werden können, die Kommunikationsknoten dynamisch insbesondere in Abhängigkeit ihres Kommunikationsbedarfs zugewiesen werden.

US 2020136993 A1 offenbart ein Verfahren eines ersten Endknotens, der ein Ethernet-basiertes Fahrzeugnetzwerk bildet, umfasst den Empfang eines ersten Beacons von einem zweiten Endknoten, wobei der Beacon erste Konfigurationsinformationen eines ersten Hauptzyklus einschließlich einer Vielzahl von Unterzyklen enthält, von denen jeder N umfasst Zeitfenster; Senden eines Signals in einem Zeitschlitz, der einer Kennung des ersten Endknotens unter den N Zeitschlitzen entspricht, innerhalb eines Unterzyklus # k der mehreren Unterzyklen; und Senden eines Signals in einem Zeitschlitz, der der Kennung des ersten Endknotens unter den N Zeitschlitzen entspricht, in einem Unterzyklus # (k+1), der auf den Unterzyklus # k der mehreren Unterzyklen folgt.

US 2005 213 503 A1 führt in Übereinstimmung mit bestimmten beschriebenen Implementierungen eine koordinierende Vorrichtung Bandbreitenzuweisungsprozeduren basierend auf Informationen aus zuvor nicht erfüllten Bandbreitenzuweisungsanforderungen durch und reagiert auf aktuelle Bandbreitenzuweisungsanforderungen. Die aktuellen Bandbreitenzuweisungsanforderungen legen die aktuell angeforderten Bandbreitenbeträge für mehrere Streams fest, und die aktuellen Bandbreitenzuweisungsanforderungen können von mehreren Entitäten mit mehreren Streams empfangen werden. Die Informationen aus zuvor nicht erfüllten Bandbreitenzuweisungsanforderungen werden berücksichtigt, wenn die verfügbare Bandbreite zwischen mehreren Streams von mehreren Entitäten für die aktuell angeforderten Bandbreitenbeträge zugewiesen wird. Bei Planung des Buszugriffs der Netzknoten wird vom Headnode die 'nichtbediente' Zugriffsreservierung aus dem vorhergehenden Zyklus mitberücksichtigt.

Im Gegensatz zu einem Switched Netzwerk (wie bei 100/1000... Mbit/s) kann mit 10Mbit/s, wie beschrieben, nicht sofort auf den Bus zugegriffen werden, sondern es muss der jeweilige Zeitpunkt abgewartet werden.

Teilnetzbetrieb (aka Sleep/Wakeup) wird eine immer wichtigere Funktion für das Automobil und bspw. auch für den Ethernet-Bus. Dabei werden Steuergeräte bei Bedarf (auch über den Bus) aufgeweckt oder schlafen gelegt, um bspw. Energie einzusparen oder sie initial zu starten.

Der 10Mbit-Bus bietet im Vergleich zu anderen Ethernet-Typen deutlich weniger Datenrate, weshalb hier speziell auf Effizienz der Datenübertragung und der Latenz der Übertragung resp. auch der Zugriffszeit geachtet werden muss. Wenn auch noch Security ein Teil des 10Mbit/s Systems wird, dann bleibt kaum noch Datenrate für Nutzdaten übrig, wie es ähnlich zu den aktuellen CAN-FD-Implementierungen der Fall ist.

Mit der Funktion Teilnetzbetriebs muss man sich zusätzlich Gedanken über die Zugriffszeiten und die Effizienz des Busses machen, da dies ein neues Szenario ist, welches im Standard nicht betrachtet wurde.

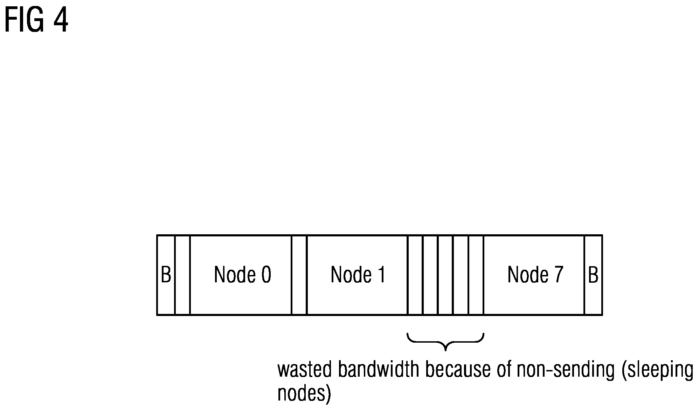

In Fig. 4 ist das generelle Problem dargestellt. Für schlafende oder defekte Knoten (Steuergeräte) wird Bandbreite für alle Knoten verschwendet / freigehalten. Hiermit wird die Bandbreite des Busses eingeschränkt und unnütz Ressourcen verbraucht. Das Problem heute ist, dass der Standard nur das Senden eines Frames pro Zyklus erlaubt und somit mit steigender Zahl der Knoten am Bus die verbleibende Datenrate für den jeweiligen Knoten (hier konkret Masterknoten bzw. Headnode) abnimmt.

Der Headnode wird entweder in einer Head-Unit, einem Gateway, einer Fusionseinheit oder generell in einem Zonencontroller implementiert sein, also üblicherweise genau auf dem Steuergerät, von dem auch Updates oder Diagnoseabfragen ausgehen.

Bekannt ist einen sogenannten Burstmode einzusetzen, bei dem Knoten max. 255 Pakete während ihres Zyklus schicken können, jedoch ist dieser Modus statisch vor zu konfigurieren und beizubehalten.

Mit dem teilautomatisierten und hochautomatisierten Fahren kommen zunehmend Anforderungen ins Fahrzeug die vom Übertragungsnetzwerk und den Protokollen harte Echtzeitunterstützung verlangen, wie es heute schon im Flugzeug oder der Industrieautomatisierung zu erfüllen gilt.

Weiterhin wird ein Bordnetz in Zukunft viel flexibler als heute sein. Knoten werden abgeschaltet, während des Betriebes, wenn sie nicht benötigt werden (dies wird auch Teilnetzbetrieb oder Partial Networking genannt). Das wiederum bedeutet, dass sich das Bordnetz dynamisch zur Laufzeit sehr stark ändern wird. Diese Funktionen werden bereits implementiert und für 2020 in Serie gebracht.

Die Aufgabe der Erfindung ist es, die neuen Ethernet-Technologien kostenoptimiert und mit geringem Implementierungsaufwand anzupassen.

Die Aufgabe wird gelöst durch die Merkmale des Verfahrens nach Anspruch1, dem Steuergerät nach Anspruch 4 und dem Ethernetnetzwerk nach Anspruch nach 6.

Vorteilhaft wird durch die Erfindung die neuen Ethernet-Technologien hinsichtlich Kosten und Implementierungsaufwand für den automobilen Einsatz angepasst.

Die Erfindung schlägt ein Verfahren vor, dass den Buszyklus an die Datenratenanforderungen des Headnodes anpasst. Das bedeutet, dass dem Headnode nach Bedarf dynamisch mehr Bandbreite zugewiesen werden kann. Die Erfindung schlägt ein Verfahren vor, dass je nach der Größe der zu übertragenden Daten den Buszyklus so anpasst, dass die Anforderungen des Downloads/Updates an die Übertragungszeit nicht verletzt werden. Hierbei berechnet das Verfahren wieviel Bandbreite zu welcher Zeit bereitgestellt werden muss. Dabei berücksichtigt das Verfahren aber stets den Standard und muss nicht auf die anderen Knoten eingreifen.

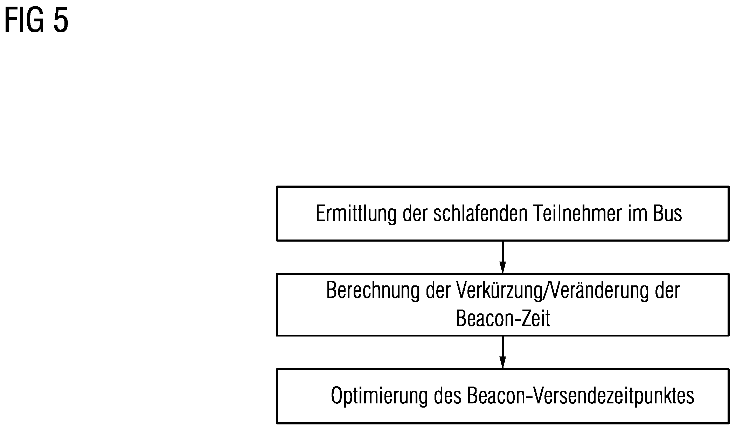

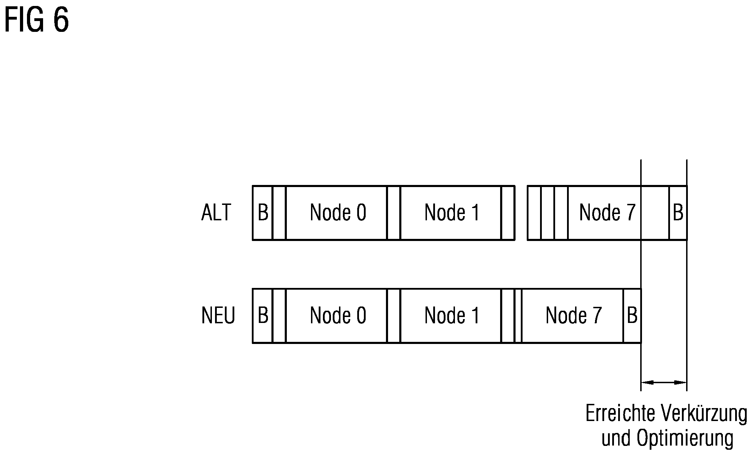

Die Erfindungsmeldung schlägt ein Verfahren vor, dass den "Buszyklus", bzw. die Versendezeit der Beacons, dynamisch an das aktuelle und zukünftige Netzverhalten anpasst, wie in Fig. 5 angegeben. Das bedeutet, dass der Bus entsprechend angepasst wird, indem die unbenutzten Sendeslots entfernt, verschoben werden, damit andere Knoten so schneller Zugriff auf den Bus bekommen, wie in Fig. 6 angegeben. Dies ist bisher so nicht vorgesehen, kann aber ohne Mehraufwand durch lediglich SW und Konfiguration ohne den Einsatz von neuer Hardware umgesetzt werden.

Die Lösung und Vorteil des erfindungsgemäßen Verfahrens liegt in der individuellen Verkürzung, Anpassung des Schedules bzw. Buszyklus. Durch früheres Senden des Beacon-Frames, dargestellt als ‚B' in Fig. 6 können die folgenden Buszyklen stets früher durchgeführt werden. Die Sendeslots der einzelnen Knoten bzw. Node können zwischen 64 und 1522 Byte groß sein und sind nur der Einfachheit halber stets gleich groß gezeichnet.

In vorteilhafter Weise kann durch die Erfindung die Güte der Ausführung von Sensor-basierenden Anwendungen (z. B. Automatisiertes Fahren, Datenlogger, Diagnose) erhöht werden. Die Idee lässt sich ohne finanziellen Mehraufwand (Hardwarekosten) und unter Beibehaltung des Standards) verwirklichen. Mit der Nutzung der neu eingeführten Ethernet-Protokolle im Automobil sind Mechanismen notwendig, die sich einfache Techniken und gegebene Eigenschaften von Technologien zu Nutze machen, um auf teure Implementierungen und weitere zusätzliche Hardware verzichten zu können. Das erfindungsgemäße Netzwerksystem ist im Hinblick auf Zuverlässigkeit verbessert. Continental kann hiermit durch Softwarebasierte Verfahren das beste aus seiner ECU oder dem Netzwerk herausholen und dem Kunden mehr Funktionalität bieten.

Als Vorteil aus der anwendungsspezifischen Bestimmung einer genaueren und vorhersagbaren Verzögerung ergibt sich eine Verbesserung der Planung und Ausführung der Kommunikation im Fahrzeug. Hierdurch können vorhandene Bussysteme effizienter ausgenutzt werden, und der Sprung zu einer teuren Technologie mit höherer Bandbreite kann vermieden werden. Dies kann auch Auswirkungen auf benötigte Pufferspeicher haben, auf die dann verzichtet oder kleiner ausgelegt werden kann. Fusionen von verschieden Daten, bspw. Ultraschall, Radar oder Mikrofonen können hiermit verbessert und genauer ausgelegt werden. Weiterhin kann das Loggen von Daten noch präziser gestaltet werden.

Heute werden Anwendungen zugeschnitten und angepasst auf eine Plattform. Mit dieser Erfindung werden Verfahren vorgestellt, die Software etwas flexibler gestalten lässt und das Beste aus dem darunter liegenden System macht, ohne es vorher fest in Software programmiert zu haben. Auszugehen ist von dem sogenannten Worst-Case, was Ressourcen und Geld kostet und Qualität einbüßt. Die Erfindung erlaubt es den Softwareentwicklern und -architekten eine Software/Anwendung anzubieten, welche flexibler und präziser auf die Anforderungen des Anwendungsfalles zugeschnitten werden kann. Durch den Einbau des beschriebenen Verfahrens in unsere Software kann jeweils innerhalb des Steuergerätes eine Optimierung erfolgen. Dies bedeutet, dass Software plattformabhängiger entwickelt werden kann.

Teilnetzbetrieb als Systemfunktion hat noch größere Auswirkungen auf das Gesamtsystem, wenn damit bspw. die Effizienz des Busses beeinflusst werden kann und Steuergeräte keine Zeit mehr mit dem "Warten" verschwenden, was bei der 10Mbit/s Technologie leider müssen.

Die neuen Technologien sind im Automobil nicht mehr aufzuhalten. Protokolle wie IP, AVB und TSN haben mehrere Tausend Seiten an Spezifikationen und Testsuites. Die Beherrschbarkeit dieser neuen Protokolle im Automobil ist nicht direkt gegeben.

Ein Vorteil dieser Erfindung ist, dass die gängige Hardware nicht verändert werden muss, sondern die bestehende weiterverwendet werden kann. Das neue Verfahren kann in ein bestehendes Netzwerk integriert werden ohne dass vorhandene Geräte zu Schaden kommen. Der Standard wird nicht verletzt, da das vorhandene Protokoll verwendet werden kann. Gerade diese Sensoren müssen so günstig wie möglich sein, um den Massenmarkt zu bedienen. Wenn auf eine teurere Schnittstelle wie Kabel/Stecker verzichtet werden kann, bedeutet dies einen großen Mehrwert. Zudem wird die Güte der Daten besser, je schneller die Daten auf den Bus gelangen und umso weniger gewartet und / oder gespeichert werden muss.

Es wird mit dem Vorschlag ein Problem behoben, dass die Beacon-Zykluszeit nur vom Bus und dessen Konfiguration abhängt, aber nicht von dem einzelnen Knoten bzw. deren Anforderungen. Die grundlegende Revolution der neuen Architekturen ist durch die Zentrierung der Software auf immer weniger Recheneinheiten geprägt. Diese sog. Server oder Zentralrechner bestehen nicht mehr nur aus nur einem µC oder µP sondern beinhalten mehrere µC, µP, SOC und auch Ethernet-Switches mit mit einer großen Anazhl an Ports. Sie stellen ein eigenes lokales Netzwerk mit jeweils individueller Software dar, das bedeutet auch, dass die jeweiligen Softwarekomponenten nicht wissen (können) das Sie bspw. mit Komponeneten kommunizieren, welche im gleichen Gehäuse verortet sind. Bekannt ist Zonenarchitektur mit zentralen Servern. Hier gilt, dass zum einen der Server viele und leistungsstarke Prozessoren beinhaltet und zum anderen sehr viel Software resp. Anwendungen darauf ausgeführt werden. Der Kommunikationsaufwand innerhalb des Steuergeräts ist enorm, und dies stellt ein eigenes lokales Netzwerk dar. Die gesamte Software des Fahrzeuges wird hier in Zukunft ausgeführt, und jeder Controller hat seinen eigenen Software-Stack, welcher von verschiedenen Anbietern zur Verfügung gestellt wird.

Bekannt sind Konzepte um Funktionen und Anwendungen auf andere Steuergeräte/Prozessoren dynamisch auszulagern also auch um diese zu optimieren. Dies wird als Live-Migration, Reallokation oder Migration bezeichnet. Der Serieneinsatz für die Auslagerung von Software auf andere ECUs/Prozessoren ist bekannt.

Durch die neuen Architekturen gibt es nun erstmal Möglichkeiten Software auch auf verschiedenen ECUs zu implementieren, da die Hardware generalisierter wird und die Software plattformunabhängiger, wobei bisher dies nicht mit allen Funktionen und ECUs möglich ist. Es steht also zur Designzeit des Systems nicht immer fest, auf welchem Steuergerät (Server), welche Software laufen wird. Die Verschiebung der Software beschränkt sich dabei aber nicht auf ECU-zu-ECU Operationen, sondern bezieht sich noch mehr auf Controller-zu-Controller Operationen innerhalb derselben ECU.

BESCHREIBUNG UND VORTEILE DER ERFINDUNG

Die Idee lässt sich ohne finanziellen Mehraufwand, wie Hardwarekosten und unter Beibehaltung des Standards verwirklichen. Mit der Nutzung der neu eingeführten Ethernet-Protokolle im Automobil sind Mechanismen notwendig, die sich einfache Techniken und gegebene Eigenschaften von Technologien zu Nutze machen, um auf teure Implementierungen und weitere zusätzliche Hardware verzichten zu können. Das erfindungsgemäße Netzwerksystem ist im Hinblick auf Zuverlässigkeit verbessert.

Als Vorteil aus der anwendungsspezifischen Bestimmung einer genaueren und vorhersagbaren Verzögerung ergibt sich eine Verbesserung der Planung und Ausführung der Kommunikation im Fahrzeug. Hierdurch können vorhandenen Bussysteme effizienter ausgenutzt werden und der Sprung zu einer teuren Technologie (höhere Bandbreite) kann vermieden werden. Dies kann auch Auswirkungen auf benötigte Pufferspeicher haben, auf die dann verzichtet werden kann (oder kleiner ausgelegt). Fusionen verschiedener Daten (z.B. Ultraschall + Radar oder Mikrofone) können hiermit verbessert und genauer ausgelegt werden. Weiterhin kann das Loggen von Daten noch präziser gestaltet werden.

Wenn es sich um ein Software Update handelt, dann kann durch die Erfindung ein realistischeres Zeitfenster zurückgemeldet werden, und es muss nicht vom Worst Case ausgegangen werden. So sind Downloads/Updates möglich, die sonst nie oder später gestartet werden würden.

Der Einsatz des erfindungsgemäßen Verfahrens kann in weiteren Industrie-Bereichen eingesetzt werden, die 10 Mbit/s-Ethernet einsetzen wie bspw. in der der Industrie-Automatisierung.

TECHNISCHE VORTEILE DER ERFINDUNG

Die Aufgabe wir vorteilhaft gelöst durch ein Verfahren zur Optimierung der Übertragungsdatenrate in einem Sensornetzwerke im Teilnetzbetrieb in einem Ethernetnetzwerk, wobei das Verfahren umfasst:

a) Bestimmung der Anzahl der aktiven Knoten durch einen Headnode,
b) Klassifizierung der erkannten Knoten in zwei oder mehr Klassifikationen von Knoten zur Priorisierung der Ethernetnetzwerkkommunikation durch den Headnode;
c) Empfang von Reservierungsanforderungen von mindestens einem Teil der Vielzahl von Knoten durch den Headnode,
d) Zuweisung von Zeitschlitze als Antwort auf Reservierungsanforderungen an einen oder mehreren Knoten im bevorstehenden Kommunikationsfenster, wobei die Zuweisungen auf einer Priorität der Knoten basiert und die Priorität den Knoten gemäß ihrer Klassifizierung zugewiesen wird, wobei nach der Bestimmung der Anzahl der aktiven Knoten, eine Berechnung der Buszykluslänge erfolgt und die Anzahl der schlafenden oder inaktiven oder defekten Knoten bestimmt wird, wobei ein Beacon-Buszyklus in der Art bestimmt wird, um wieviel die Buszykluslänge verkürzt werden kann.

In einer vorteilhaften Ausgestaltung des Verfahrens wird die Busauslastung durchgehend überwacht, und durch das frühere Senden des Beacons (B') die folgenden Buszyklen früher durchgeführt.

Eine weiter vorteilhafte Ausgestaltung des Verfahrens zeichnet sich dadurch aus, dass nach einer Ermittlung der Busposition (Node-ID) der schlafenden Knoten, überprüft wird, ob es einen Knoten mit einer höheren Busposition (Node-ID), die keinen schlafenden Knoten repräsentiert, gibt, der nicht aktiv ist, eine Optimierung der Busposition (Node-ID) der aktiven Knoten erfolgt.

Eine weiter vorteilhafte Ausgestaltung des Verfahrens zeichnet sich dadurch aus, dass nach der Ermittlung der notwendigen Download-Datenrate, eine Ermittlung einer aktuell freien Datenrate im Ethernetnetzwerkes im letzten Buszyklus ($D_{frei}$) des Ethernetnetzwerkes erfolgt, eine Bestimmung einer notwendigen Datenrate pro Buszyklus ($D_{zus}$) erfolgt, wobei wenn die freien Datenrate im Ethernetnetzwerkes im letzten Buszyklus ($D_{frei}$) des Ethernetnetzwerkes größer oder gleich der notwendigen Datenrate pro Buszyklus ($D_{zus}$) ist, keine Änderung im nächsten Buszyklus vorgenommen wird, und wenn die freien Datenrate im Ethernetnetzwerkes im letzten Buszyklus ($D_{frei}$) des Ethernetnetzwerkes kleiner der notwendigen Datenrate pro Buszyklus ist, eine Änderung im nächsten Buszyklus vorgenommen wird.

Besonders vorteilhaft ist Umsetzung durch eine Steuereinheit für ein Ethernetnetzwerk, welche als erster Knoten als Steuereinheit dazu ausgebildet ist, ein Signal an eine zweite Steuereinheit des Ethernet-Bordnetzes zu senden und das Signal von der zweiten Steuereinheit zu empfangen; eine Laufzeit des Signals auf einem Verbindungsweg zur zweiten Steuereinheit zu bestimmen; eine Maximalgeschwindigkeit des Verbindungswegs anhand der Laufzeit zu bestimmen; und eine Art eines Übertragungsmediums des Verbindungswegs anhand der Maximalgeschwindigkeit zu bestimmen, mindestens umfassend einen Mikroprozessor, einen flüchtigen Speicher und nichtflüchtigen Speicher, mindestens zwei Kommunikationsschnittstellen, einen synchronisierbaren Zeitgeber, der nichtflüchtige Speicher-Programminstruktionen enthält, die, wenn sie von dem Mikroprozessor ausgeführt werden, wobei zumindest eine Ausgestaltung des erfindungsgemäßen Verfahrens implementierbar und ausführbar ist.

Besonders vorteilhaft ist die Umsetzung durch ein Ethernetnetzwerk für ein Kraftfahrzeug, mit einer ersten Steuereinheit und einer zweiten Steuereinheit, wobei die Steuereinheiten über zumindest einen Verbindungsweg miteinander verbunden sind, und die erste Steuereinheit ausgebildet ist, um das erfindungsgemäße Verfahren durchzuführen.

Eine besonders vorteilhafte Ausgestaltung des Ethernet-Bordnetz zeichnet sich dadurch aus, dass das Ethernetnetzwerk eine dritte Steuereinheit aufweist, welche nur indirekt mit der ersten Steuereinheit verbunden ist und über einen dritten Verbindungsweg direkt mit der zweiten Steuereinheit verbunden ist, wobei die dritte Steuereinheit dazu ausgebildet ist, eine Laufzeit eines dritten Signals auf dem dritten Verbindungsweg zu bestimmen, wobei die erste Steuereinheit dazu ausgebildet ist, die Bestimmung der Laufzeit des dritten Signals durch eine Dienstnachricht an die dritte Steuereinheit auszulösen.

Durch die Implementierung der durch die Erfindung angegeben Verfahren kann plattformunabhängige Software mit höherer Qualität und Lebensdauer zum Einsatz kommen. Der Einsatz der Erfindung kann in andere Kommunikationssysteme mit Uhrensynchronisationskomponenten und embedded Systemen eingesetzt werden.

ZEICHNUNGEN

Ein Ausführungsbeispiel der Erfindung ist in den Zeichnungen dargestellt und wird im Folgenden näher beschrieben. Es zeigen:

Fig. 1      die vereinfachte Darstellung der Unterschiede zwischen einem Ethernet-Bus (10Mbit/s) und einem Switched Network;

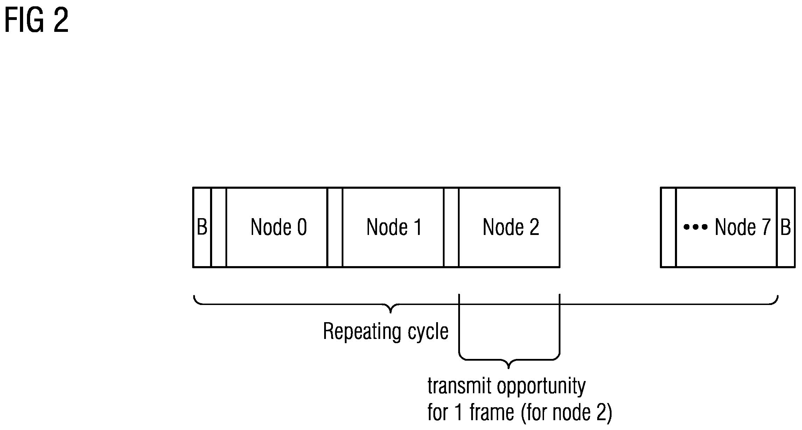

Fig. 2      den prinzipiellen Ablauf der Kommunikation am Ethernet-Bus;

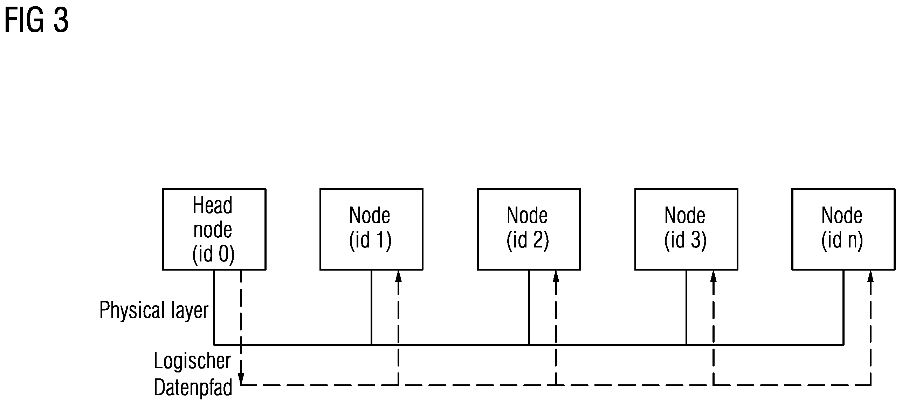

Fig. 3      die physische Darstellung des Ethernet-Busses mit Stubs;

Fig. 4      dass bei schlafenden Knoten der Bus nicht nur massiv Bandbreite verschwendet, sondern erhöht auch sinnlos die Latenz der anderen Knoten;

Fig. 5      die dynamische Anpassung der Sendezeitfenster;

Fig. 6      die Lösung und Vorteil der durch individuelle Verkürzung und Anpassung des Schedules bzw. Buszyklus;

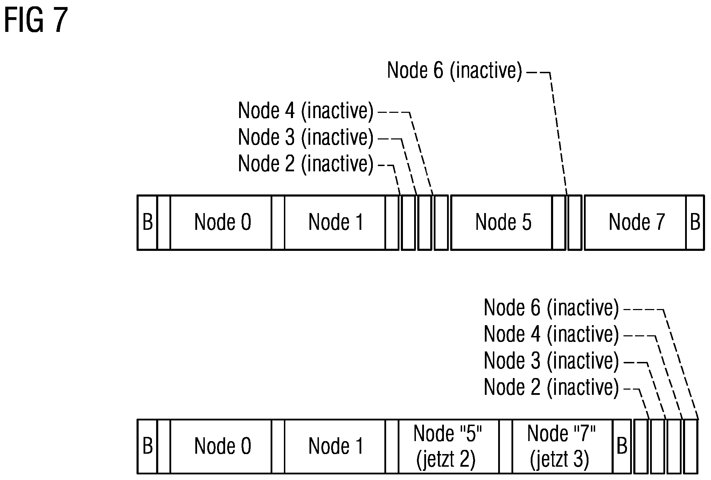

Fig. 7      ein weiteres Beispiel der Verkürzung eines unnötig langen Schedules ohne die hier vorgeschlagene Optimierung (oben) und nach der Optimierung / Verkürzung (unten);

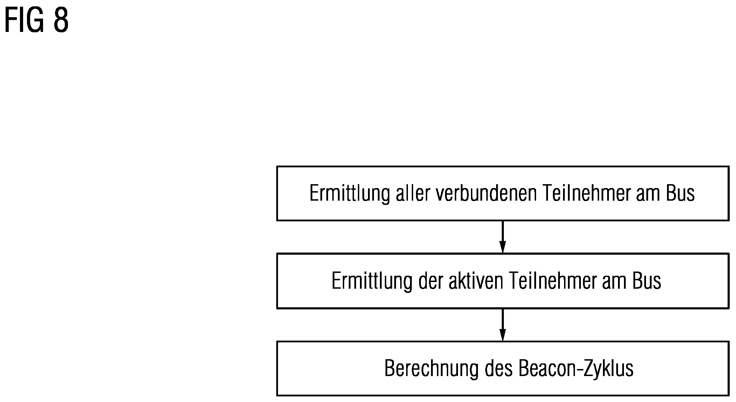

Fig. 8      die Berechnung des nächsten Beacon-Zyklus mit dem Minimum und dem Maximum;

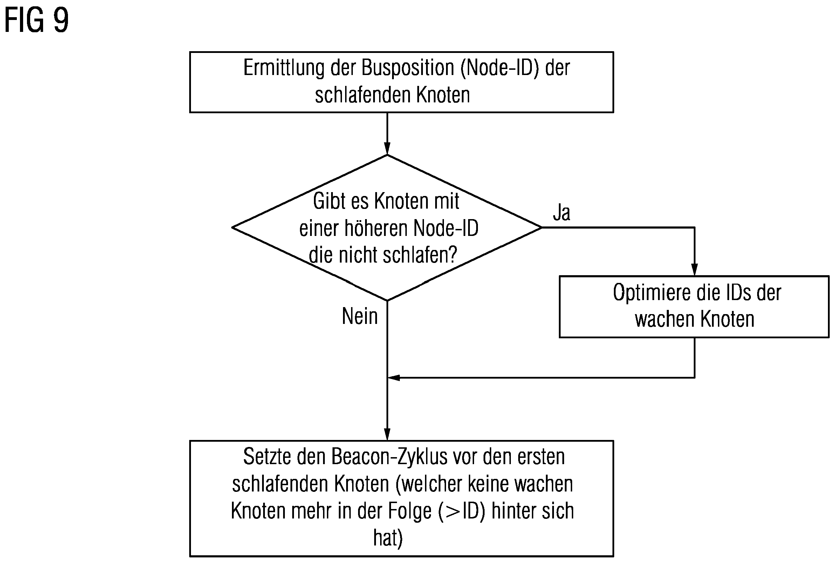

Fig. 9      die Ermittlung des Zeitpunkts der Versendung des Beacon in Abhängigkeit der Position (hier: Node ID) der aktiven/schlafenden Knoten;

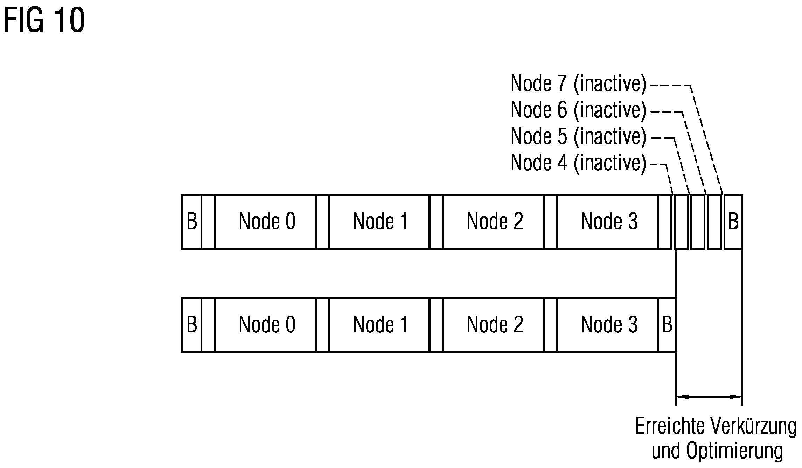

Fig. 10     die Verkürzung und Optimierung der Zykluszeit durch vorgezogenes Senden des nächsten Beacon-Frames bei ausschließlich inaktiven Knoten am "Ende" des Busses (höchste Node-IDs);

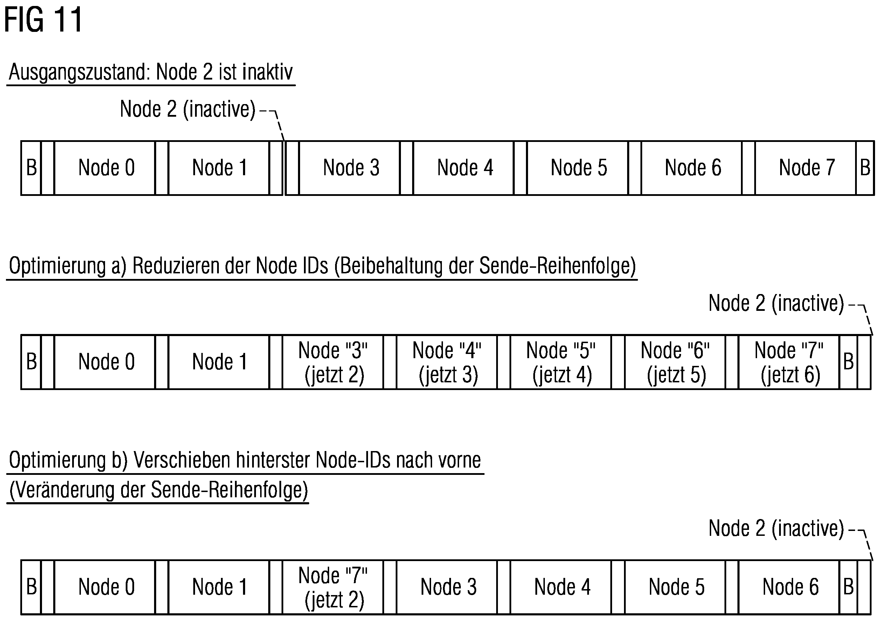

Fig. 11     die verschiedenen Optimierungsmöglichkeiten des Bus-Zyklus am Beispiel nur eines schlafenden Nodes (ID 2).

BESCHREIBUNG VON AUSFÜHRUNGSBEISPIELEN

Die Fig. 1 zeigt die vereinfachte Darstellung der Unterschiede zwischen einem Ethernet-Bus (10Mbit/s) und einem Switched Network:
Die Erfindungsmeldung schlägt ein neues Verfahren vor, um die Effizienz der Datenübertragung auf dem Automotive 10Mbit/s Bus zu optimieren und die Buszugriffszeit für die Knoten zu reduzieren.

Die Fig. 2 zeigt den prinzipiellen Ablauf der Kommunikation am Ethernet-Bus. Nach Aussendung des Beacons ist erst Knoten 0 an der Reihe und wenn dieser seine Übertragung beendet hat darf der nächste Knoten senden (typischerweise darf im Slot jeweils nur ein einzelner Ethernet-Frame gesendet werden).
Die Grundüberlegung des erfindungsgemäßen Verfahrens beschreibt eine dynamische Anpassung des Bus-Zyklus. Im Gegensatz zum FlexRay hat dies keine negativen oder unbedachten Auswirkungen. Die Knoten habe kein fix definiteres Zeitfenster, sondern folgen nur einer Reihenfolge. Welche Daten von den Knoten vorher geschickt werden, weiß auch der Headnode nicht.

Die Fig. 3 zeigt die physische Darstellung des Ethernet-Busses mit Stubs
Das Verfahren ermittelt als Erstes alle Knoten am Bus. Dies ist typischerweise statisch vorkonfiguriert, da der Headnode diese Anzahl der Knoten wissen muss, um den Ablauf zu planen.

Die Fig. 4 zeigt, dass bei schlafenden Knoten der Bus nicht nur massiv Bandbreite verschwendet, sondern erhöht auch sinnlos die Latenz der anderen Knoten.

Die Fig. 5 zeigt die dynamische Anpassung der Sendezeitfenster. Der Headnode ermittelt dann alle schlafenden oder defekten oder inaktiven Knoten am Bus. Dabei kann unterschieden werden, ob diese zurzeit schlafen oder ob ein Zeitpunkt in der Zukunft bekannt ist, wenn die Knoten inaktiv sind - schlafen bzw. inaktiv heißt in diesem Zusammenhang das sie nicht an der Buskommunikation teilnehmen (weder aktiv - Nutzdaten senden - noch passiv - Nutzdaten empfangen). Diese Kenntnis bekommt der Headnode entweder über eine höhere Softwareschicht, bzw. Applikation mitgeteilt durch eine Mittteilung eines oder des Knoten am Bus z.B. Antwort auf ein Sleep/Wake-up-Signal aufgrund eines Fehlerzustandes eines Knotens, bspw. durch eine Anfrage des Netzwerkmanagements, Überprüfung von Protokollen, Auslesen von Registern am Knoten.

Die Fig. 6 zeigt die Lösung und den Vorteil der durch individuelle Verkürzung und Anpassung des Schedules bzw. Buszyklus. Durch früheres Senden des Beacon-Frames, dargestellt als ‚B', können die folgenden Zyklen stets früher durchgeführt werden. Die Sendeslots der einzelnen Knoten (Node) können zwischen 64 und 1522 Byte groß sein und sind nur der Einfachheit halber stets gleich groß gezeichnet.

Die Fig. 7 zeigt ein weiteres Beispiel der Verkürzung eines unnötig langen Schedules ohne die hier vorgeschlagene Optimierung (oben) und nach der Optimierung / Verkürzung (unten).

Die Fig. 8 zeigt die Berechnung des nächsten Beacon-Zyklus mit dem Minimum und dem Maximum.

Der Beacon-Zyklus (resp. wann der nächste Beacon ausgesendet wird bzw. wie viele Knoten am Bus aktiv sind) lässt sich berechnen indem die Anzahl der schlafenden oder defekten oder inaktiven Knoten ermittelt wird. Per se kann mit der verbleibenden Anzahl der aktiven Knoten, egal welche ID sie haben, erstmal berechnet werden wieviel Zeit am Bus eingespart, bzw. um wieviel der Buszyklus verkürzt werden kann.

Bei einer Zykluslänge im Normalmodus von

$$Z = \text{Knoten} * (\text{Sendefenster} + \text{Framegröße}) \text{ reduziert sich so generell auf}$$

$$Z' = (\text{Knoten-NichtaktiveKnoten})*(\text{ Sendefenster} + \text{Framegröße}).$$

Die Fig. 9 zeigt die Ermittlung des Zeitpunkts der Versendung des Beacon in Abhängigkeit der Position (hier: Node ID) der aktiven/schlafenden Knoten.

Alle Knoten am Bus haben eine eindeutige ID. Das Verfahren bestimmt über die Gesamtanzahl der Knoten und der ID die Position der schlafenden Knoten je Bus-Zyklus. Die Anzahl der Knoten am 10Mbit/s Ethernet-Bus für Automotive ist durch die Bustopologie limitiert und so kann leicht ein Überblick ermittelt werden ob sich "hinter" dem schlafenden oder ggf. fehlerhaften Knoten (IDschlafenderKnoten < IDaktiverKnoten) ein aktiver Knoten befindet.

Wenn sich bis zur höchsten ID kein aktiver Knoten mehr befindet, dann wird der Beacon-Zyklus so angepasst, dass der Beacon vor den Sendeslot, der sogenannten Transmit Opportunity, des ersten schlafenden Knotens gesetzt wird, welcher nur aktive Knoten vor und schlafende Knoten hinter sich hat. Dieses Verfahren setzt voraus, dass sich hinter dem schlafenden Knoten, also höhere ID, kein aktiver Knoten, oder ECU, Sensor, mehr befindet, wie es in Fig 10 angegeben ist. Diese Wahrscheinlichkeit ist ziemlich hoch, da das 10 Mbit/s-Ethernet-Bussystem im Automotive-Umfeld heute für typ. 8 ECUs ausgelegt ist.

Die Fig. 10 zeigt die Verkürzung und Optimierung der Zykluszeit durch vorgezogenes Senden des nächsten Beacon-Frames bei ausschließlich inaktiven Knoten am "Ende" des Busses, somit der höchsten Node-IDs.

Wenn allerdings ein Knoten mit einer kleinen ID nicht mehr am Bus teilnimmt, dann schlägt die Erfindung vor die IDs der Knoten anzupassen bzw. zu optimieren.

Hierfür gibt es mehrere erfindungsgemäße Vorschläge, wie in Fig. 11 dargestellt. Die Auswahl oder eine Kombination der Methoden kann je nach Anwendungsfall angepasst werden:

Die IDs aller aktiven Knoten am Bus mit einer höheren ID werden um die Anzahl der schlafenden Knoten vorher reduziert. Wenn bspw. ID 3 schläft so wird ID 4 um eins reduziert. Dadurch wird die Sende-Reihenfolge der Bus-Knoten beibehalten.

Eine weitere Möglichkeit ist es, die schlafenden IDs durch Knoten mit der höchsten ID aufzufüllen. Wenn ID 3 schläft, dann wird diese ID der höchsten (bspw. ID 8) neu zugewiesen. Dadurch wird die Reihenfolge der Busknoten zwar verändert, es müssen aber weniger Busknoten umkonfiguriert werden.

Die Fig. 11 zeigt die verschiedenen Optimierungsmöglichkeiten des Bus-Zyklus am Beispiel nur eines schlafenden Nodes (ID 2).

Damit der Buszyklus nicht nutzlos optimiert bzw. angepasst wird, schlägt das Verfahren vor die aktuelle Busauslastung zu ermitteln. Die aktuelle Auslastung kann mittels der zeitlichen Differenz der letzten Beacons und der Anzahl der teilnehmenden Knoten erfolgen. Ergibt sich eine geringe Busauslastung, so ist statistisch anzunehmen, dass diese nicht sprunghaft zum nächsten Zyklus hin ansteigt. Auf etwaige Änderungen kann dennoch reagiert werden, da vorgeschlagen wird die Busauslastung durchgehend zu überwachen.

Im letzten Schritt wird der Buszyklus im Hinblick auf die erforderliche Datenrate angepasst. Hierfür werden später zwei Möglichkeiten vorgeschlagen.

In einem vorteilhaften Teilschritt kann das Verfahrens, bei dem die notwendige Datenrate der aktuellen Buskapazität gegenübergestellt wird, ermittelt werden. Dabei wird erst die notwendige Download-Datenrate in Bezug auf den 10Mbit Bus berechnet. Anschließend wird die Anzahl der aktiven Knoten vom der Headnode bestimmt. Die Slots der inaktiven Knoten, entweder nur passiv mithörend, im Fehlerzustand, oder im Schlafmodus, werden ermittelt und sollen durch das Verfahren für die Headnode zur Verfügung gestellt werden, welches als $D_{frei}$ bezeichnet wird.

Dadurch ergibt sich schon einmal eine Optimierung des Busses, ohne dass hierbei aktiv in die laufende Kommunikation eingegriffen wird bzw. ohne das hierbei Knoten stumm geschaltet werden. Der Anwendung kann dann auch die reale Datenrate zurück gemeldet werden ohne dass hierbei immer vom Worst Case ausgegangen werden muss. Das spart Speicher und gibt der Anwendung, evtl. auch dem Fahrer, eine reales Zeitfenster zurück. Diese Methode ist der erste Schritt zur Optimierung des Zyklus.

Es wird eine weitere mögliche Optimierungsstufe beschrieben, anhand der berechneten, notwendigen Datenrate am Headnode eine Teilmenge (oder auch alle) der anderen Knoten am Bus (außer natürlich dem Headnode) vom Senden abzuhalten und somit die Zykluszeit zum Zweck des Downloads (oder Sicherheitsupdates) zu verringern, dass der Headnode seine notwendige Datenrate bedienen kann, selbst wenn laut normaler Busoperation nicht genug Bandbreite zur Verfügung stehen würde. Hierzu wird stets verglichen, welche Datenmenge der Headnode im aktuellen Zyklus noch zu senden hätte, wobei dieser Wert als Grenzwert genommen wird, welcher in diesem Zyklus nicht unter 0 fallen darf und weswegen vorher der Zyklus durch das Senden des nächsten Beacon beendet würde. Dieses Verfahren ergibt höchstmögliche Fairness gegenüber den anderen Busknoten, da nur innerhalb gewisser Toleranzen so viel Bandbreite wie benötigt für den Headnode in Anspruch genommen wird und der Rest weiterhin zur Verwendung durch die nachfolgenden Nodes zur Verfügung steht. Wie viele Nodes durch diese überbleibende Bandbreite in einem Zyklus noch senden können ist nicht genau vorherzusagen, da jeder Busknoten zwischen 0 (sendet gar keine Daten), 64 (sendet einen minimalen Ethernet-Frame) und 1522 Bytes (sendet einen maximalen Ethernet-Frame) liegen kann.

Um die Fairness noch weiter zu steigern wird vorgeschlagen, dass im Falle das ein Node nicht mehr senden kann und der Zyklus durch den nächsten Beacon beendet wird (da die restliche benötigte Datenrate in diesem Slot unter einen potentiell maximalen Ethernet-Frame fällt), die "Restbandbreite" in den nächsten Zyklus zu übertragen und für die Verwendung durch die anderen Busknoten im nächsten Zyklus freizugeben. So kann eine Art "Guthaben" aufgebaut werden trotz eingehaltener Bandbreitenanforderung am Headnode.

Um jedoch ein zu starkes Ansteigen des Guthabens und damit potentiell große Datenbursts bei denen viele der weiteren Busknoten ungehindert große Datenmengen senden können, zu verhindern, wird ebenfalls vorgeschlagen den Anstieg des Guthabens zu begrenzen, entweder zeitlich durch Saturierung oder Rücksetzen des Guthabens nach einer konfigurierbaren Zeitspanne in Sekunden, oder durch einen Zykluszähler bei Saturierung oder Rücksetzen des Guthabens nach einer konfigurierbaren Anzahl an Bus-Zyklen.

Diese Art der Zyklusoptimierung ist nicht die einzig Denkbare. Eine Zwischenlösung zwischen "keine Fairness", und "größtmögliche Fairness", könnte beispielsweise ein simpleres Verfahren sein, bei dem über mehrere Zyklen einzig der Headnode senden darf und sich entsprechend schnell ein großes Guthaben aufbaut. Dieses kann ab einem gewissen Schwellwert dann in einem Schwung abgebaut werden, indem dann ein Zyklus eingeschoben wird, in welchem alle Knoten eine Sendemöglichkeit erhalten bevor sie dann wieder eine bestimmte Anzahl Zyklen "aussetzen" müssen. Diese Variante lässt sich auf Wunsch zur Vereinfachung des Verfahrens auch ganz ohne eine Betrachtung von Guthaben realisieren, sondern schlicht nach Anzahl Zyklen umsetzen - bspw. "99 Zyklen sendet nur Headnode, dann 1 Zyklus alle Knoten". In diesem Fall kann allerdings ein gewisser Jitter (Varianz) in der Datenrate des Headnodes nicht ausgeschlossen werden.

Das erfindungsgemäße Verfahren kann durch alternative Verfahrensschritte, mittels dieser nach Bestimmung der Anzahl der aktiven Knoten, eine Ermittlung der nicht verwendeten Übertragungsmöglichkeiten erfolgt und hierdurch eine Berechnung der absoluten Datenrate für den Headnode pro Zeiteinheit durchgeführt wird.

Die Erfindung schlägt im Folgenden für das bereist dargestellte Verfahren vor, um die Vertrauenswürdigkeit eines Kommunikationspartners bzw. dessen Anwendung zu bestimmen. Sofern diese Vertrauenswürdigkeit bestimmt is,t kann somit der Austausch von sensiblen Daten vollzogen werden.

Die Headnode auf dem Server sind beispielsweise auf der PCB (Platine) typischerweise per MII (Media Independent Interface) oder PCI-Express verbunden und kommen damit immer ohne Transceiver (PHYs) aus.

Ein Ethernet-Transceiver (PHY) verursacht eine Verzögerung im 3-stelligen Nanosekunden Bereich. Das klingt wenig, aber die Verzögerung auf Schicht 2 (MAC) befindet sich etwa im 1-stelligen Nanosekunden Bereich bzw. tendiert gegen 0 - je nachdem wie hoch die Auflösung der Messung liegt.

Das Verfahren bestimmt zu allererst die Adresse der Anwendung, mit der Daten ausgetauscht werden sollen (empfangen, versendet oder beides).

Dann startet das Verfahren eine Laufzeitmessung zu dieser Komponente. Hierbei kann bspw. das PDelay_Request-Verfahren des gPTP Protokolls (oder 802.1AS) zum Einsatz kommen. Als Antwort darauf werden zwei Antworten zurückgeschickt, und mithilfe von Hardwarezeitstempel lässt sich die Laufzeit der Nachricht bestimmen. (Wichtig ist die Verwendung eines Protokolls mit Hardwarezeitstempeln- NTP fällt bspw. damit raus, da die Auflösung zu ungenau ist).

Mithilfe dieses berechneten Wertes berechnet das Verfahren den physikalischen Abstand zu diesem Teilenehmer. Der Abstand ist hierbei nicht direkt ausgedrückt durch eine Maßeinheit wie bspw. Meter oder Zentimeter sondern lässt sich umrechnen auf die Anzahl der Komponenten (PHYs, Switches) die Teil der Verbindung sind, da diese Verzögerung maßgeblich im Gegensatz zur Verzögerung auf dem eigentlichen Kabel ist.

Das Verfahren misst alternativ die Laufzeit zu einem Knoten/Adresse indem es Laufzeitmessungen startet (bspw. Teil des PTP Protokolls) und daraus den Abstand zu diesem Knoten berechnet.

Die gemessene Laufzeit muss erst bewertet werden, um einen Aufschluss über den Ort zu geben. Ob sich ein Partner innerhalb dergleichen ECU befindet oder nicht kann die Software nicht wissen bzw. idealerweise darf sie es nicht wissen, wenn eine generalisierte SW und keine Spezialversion genutzt wird; zudem können IP-Adressen gefälscht oder verändert werden. Die Laufzeit einer MII-basierten Verbindung kommt ohne PHYs (Transceiver) aus. Das weiß jedoch weder die Zeitsynchronisationssoftware noch die eigentliche Anwendung, die diese Untersuchung in Auftrag gibt. Ein PHY wandelt die Daten in elektrische Signale um und codiert diese noch was viel mehr Zeit in Anspruch nimmt als wenn zwei Ethernet-MACs über die MII basierten Leitungen miteinander kommunizieren.

Das vorgestellte Verfahren erkennt auch, ob ein Knoten direkt mit dem anfragenden Knoten verbunden ist. Ist dies nicht der Fall dann kann je nach Latenz das jeweilig passende Protokoll ausgewählt werden. Für Latenzen die innerhalb des Fahrzeuges gelten könnte bspw. MAC-Sec, IP-Sec zum Einsatz kommen und weitere IP/TCP-basierte Verfahren, wenn die Latenz so groß ist zweifelsfrei der Knoten sich außerhalb des Fahrzeuges befindet.

**Patentansprüche**

1. Verfahren zur Optimierung der Übertragungsdatenrate in einem Sensornetzwerk im Teilnetzbetrieb in einem Ethernetnetzwerk nach IEEE P802.3cg, Multidrop, wobei das Verfahren umfasst:

    a) Bestimmung der Anzahl der Knoten, wobei jeder Knoten eine eindeutige Node-ID aufweist, durch einen Headnode;

b) Empfang von Reservierungsanforderungen von mindestens einem Teil der Vielzahl von Knoten durch den Headnode;

c) Zuweisung von Zeitschlitzen als Antwort auf Reservierungsanforderungen an einen oder mehreren Knoten im bevorstehenden Kommunikationsfenster, wobei die Zuweisungen auf einer Priorität der Knoten basiert und die Priorität den Knoten gemäß ihrer Klassifizierung zugewiesen wird,

**dadurch gekennzeichnet, dass**

nach der Bestimmung der Anzahl der aktiven Knoten und der Node-ID durch die Headnode, eine Berechnung der Buszykluslänge (Z) erfolgt, wobe der Buszyklus (Z) bestimmt wird durch die Anzahl der Knoten multipliziert mit der Summe aus dem Sendefester und der Framegröße und indem die Anzahl und der jeweiligen Node-ID der schlafenden oder inaktiven oder defekten Knoten durch die Headnode bestimmt wird,

wobei ein Beacon-Zyklus, der bestimmt wann der nächste Beacon ausgesendet wird und wiedergibt wieviele Knoten am Bus aktiv sind, ermittelt wird, indem die Anzahl der schlafenden oder defekten oder inaktiven Knoten, die von der Headnode ermitttelt wurde, herangezogen werden, um hieraus die Anzahl der aktiven Knoten zu bestimmen und hieraus einen verkürzten Buszykluslänge (Z') zu bestimmen, indem die verkürzte Buszykluslänge (Z') bestimmt wird durch Differenz der aktiven Knoten und der Anzahl der schlafenden oder inaktiven oder defekten Knoten multipliziert mit der Summe aus dem Sendefester und der Framegröße.

2. Verfahren nach Anspruch 1, **dadurch gekennzeichnet, dass** die Busauslastung durchgehend überwacht wird und durch das frühere Senden des Beacons (B') die folgenden Buszyklen früher durchgeführt werden.

3. Verfahren nach Anspruch 1 oder 2, **dadurch gekennzeichnet, dass** nach einer Ermittlung der Node-ID der schlafenden Knoten, überprüft wird, ob es einen Knoten mit einer höheren Busposition (Node-ID), die keinen schlafenden Knoten repräsentiert, gibt, der nicht aktiv ist, eine Optimierung der Busposition (Node-ID) der aktiven Knoten erfolgt.

4. Steuereinheit für ein Ethernetnetzwerk nach IEEE P802.3cg, Multidrop, welche als erster Knoten als Steuereinheit dazu ausgebildet ist:

   - ein Signal an eine zweite Steuereinheit des Ethernet-Bordnetzes zu senden und das Signal von der zweiten Steuereinheit zu empfangen;
   - eine Laufzeit des Signals auf einem Verbindungsweg zur zweiten Steuereinheit zu bestimmen;
   - eine Maximalgeschwindigkeit des Verbindungswegs anhand der Laufzeit zu bestimmen; und
   - eine Art eines Übertragungsmediums des Verbindungswegs anhand der Maximalgeschwindigkeit zu bestimmen, mindestens umfasst:
   - einen Mikroprozessor,
   - einen flüchtigen Speicher und nichtflüchtigen Speicher,
   - mindestens zwei Kommunikationsschnittstellen,
   - einen synchronisierbaren Zeitgeber,

   der nichtflüchtige Speicher Programminstruktionen enthält die, wenn sie von dem Mikroprozessor ausgeführt werden, **dadurch gekennzeichnet, dass** zumindest eine Ausgestaltung des Verfahrens nach Anspruch 1 bis 3 implementierbar und ausführbar ist.

5. Ethernet-Bordnetzwerk für ein Kraftfahrzeug, mit einer ersten Steuereinheit und einer zweiten Steuereinheit, wobei die Steuereinheiten über zumindest einen Verbindungsweg miteinander verbunden sind, und die erste Steuereinheit gemäß Anspruch 4 ausgebildet ist.

6. Ethernet-Bordnetz nach Anspruch 5, **dadurch gekennzeichnet, dass** das Ethernetnetzwerk eine dritte Steuereinheit (5) aufweist, welche nur indirekt mit der ersten Steuereinheit (3) verbunden ist und über einen dritten Verbindungsweg direkt mit der zweiten Steuereinheit verbunden ist, wobei die dritte Steuereinheit dazu ausgebildet ist, eine Laufzeit eines dritten Signals auf dem dritten Verbindungsweg zu bestimmen, wobei die erste Steuereinheit dazu ausgebildet ist, die Bestimmung der Laufzeit des dritten Signals durch eine Dienstnachricht an die dritte Steuereinheit auszulösen.

7. Computerprogrammprodukt umfassend Befehle, die bei der Ausführung des Programms durch einen Computer diesen veranlassen, das Verfahren (200) nach einem oder mehreren der Ansprüche 1 - 3 auszuführen.

8. Computerlesbareres Medium, auf dem das Computerprogrammprodukt nach Anspruch 7 gespeichert ist.

9. Fahrzeug mit mehreren Steuereinheiten nach Anspruch 4 umfassendes Ethernet-Bordnetzwerk.


**Claims**

1. A method for optimising the transfer data rate in a sensor network in partial network operation in an Ethernet network according to IEEE P802.3cg, Multidrop, wherein the method comprises:

   a) determining the number of nodes, wherein each node has a unique node ID, by a head node;
   b) receiving reservation requests from at least one part of the plurality of nodes by the head node;
   c) allocating time slots in response to reservation requests to one or more nodes in the upcoming communication window, wherein the allocations are based on a priority of the nodes and the priority is allocated to the nodes in accordance with their classification,

   **characterised in that**,

   after determining the number of active nodes and the node ID by the head node, the bus cycle length (Z) is calculated, wherein the bus cycle (Z) is determined by the number of nodes multiplied by the sum from the transmission window and the frame size, and **in that**
   the number and the respective node ID of the dormant or inactive or defective nodes is determined by the head node,
   wherein a beacon cycle, which determines when the next beacon will be transmitted and indicates how many nodes are active on the bus, is identified by using the number of dormant or defective or inactive nodes that has been identified by the head node in order to determine the number of active nodes based thereupon and to determine a shortened bus cycle length (Z') based thereupon, **in that** the shortened bus cycle length (Z') is determined by the difference between the active nodes and the number of dormant or inactive or defective nodes multiplied by the sum from the transmission window and the frame size.

2. The method as claimed in claim 1, **characterised in that** the bus load is monitored continuously and the subsequent bus cycles are performed earlier due to the earlier transmission of the beacon (B').

3. The method as claimed in claim 1 or 2, **characterised in that** following an identification of the node ID of the dormant nodes, a check is performed to determine whether there is a node with a higher bus position (node ID) that does not represent a dormant node that is not active, and the bus position (node ID) of the active nodes is optimised.

4. A control unit for an Ethernet network according to IEEE P802.3cg, Multidrop, which as a first node as a control unit is configured to:

   - transmit a signal to a second control unit of the onboard Ethernet network and receive the signal from the second control unit;
   - determine a propagation time of the signal on a connection path to the second control unit;
   - determine a maximum speed of the connection path based on the propagation time; and
   - determine a type of a transfer medium of the connection path based on the maximum speed,

   at least comprising:

   - a microprocessor,
   - a volatile memory and a non-volatile memory,
   - at least two communication interfaces,
   - a synchronisable timer,

      the non-volatile memory containing program instructions which, when executed by the microprocessor, **characterised in that** at least one embodiment of the method as claimed in claims 1 to 3 can be implemented and executed.

5. An onboard Ethernet network for a motor vehicle, having a first control unit and a second control unit, wherein the control units are connected to one another via at least one connecting path, and the first control unit being configured as claimed in claim 4.

6. The onboard Ethernet network as claimed in claim 5, **characterised in that** the Ethernet network has a third control unit (5), which is connected to the first control unit (3) only indirectly and is connected to the second control unit directly via a third connection path, wherein the third control unit is configured to determine a propagation time of a third signal on the third connection path, wherein the first control unit is configured to trigger the determination of the propagation time of the third signal by means of a service message to the third control unit.

7. A computer program product comprising instructions which, when the program is executed by a computer, cause said computer to carry out the method (200) of any one or more of claims 1 to 3.

8. A computer-readable medium on which the computer program product of claim 7 is stored.

9. A vehicle having an onboard Ethernet network comprising multiple control units as claimed in claim 4.

**Revendications**

1. Procédé pour optimiser le débit de données de transmission dans un réseau de détection dans un fonctionnement de réseau partiel dans un réseau Ethernet, conformément à la norme IEEE P802.3cg, Multidrop, dans lequel le procédé comprend :

   a) la détermination du nombre de nœuds, dans lequel chaque nœud possède un identifiant de nœud unique, par un nœud principal ;
   b) la réception des demandes de réservation d'au moins une partie de la pluralité de nœuds par le nœud principal ;
   c) l'attribution de créneaux horaires en réponse aux demandes de réservation adressées à un ou à plusieurs nœuds dans la fenêtre de communication à venir, dans lequel les attributions sont basées sur une priorité des nœuds et la priorité est attribuée aux nœuds en fonction de leur classification,

   **caractérisé en ce que**

   une fois que le nœud principal a déterminé le nombre de nœuds actifs et l'identifiant de nœud,
   un calcul de la longueur du cycle de bus (Z) est effectué, dans lequel le cycle de bus (Z) est déterminé par le nombre de nœuds multiplié par la somme de la fenêtre de transmission et de la taille de la trame, et **en ce que** le nombre et l'identifiant de nœud respectif des nœuds dormants, inactifs ou défectueux sont déterminés par le nœud principal,
   dans lequel un cycle de balise, qui détermine quand la prochaine balise est envoyée et reflète le nombre de nœuds actifs sur le bus, est déterminé en utilisant le nombre de nœuds dormants, défectueux ou inactifs déterminé par le nœud principal pour calculer le nombre de nœuds actifs et une longueur de cycle de bus raccourcie (Z') est calculée en multipliant la différence entre le nombre de nœuds actifs et le nombre de nœuds dormants, inactifs ou défectueux par la somme de la fenêtre de transmission et de la taille de trame.

2. Procédé selon la revendication 1, **caractérisé en ce que** l'utilisation du bus est surveillée en permanence et que les cycles de bus suivants sont effectués plus tôt par un envoi de la balise (B') plus tôt.

3. Procédé selon la revendication 1 ou 2, **caractérisé en ce que**, après avoir déterminé l'identifiant de nœud des nœuds dormants, on vérifie s'il existe un nœud avec une position de bus plus élevée (identifiant de nœud) qui ne représente pas un nœud dormant et qui n'est pas actif, une optimisation de la position de bus (identifiant de nœud) des nœuds actifs est effectuée.

4. Unité de commande pour un réseau Ethernet conformément à la norme IEEE P802.3cg, Multidrop, configurée comme premier nœud en tant qu'unité de commande :

   - pour envoyer un signal à une deuxième unité de commande du réseau Ethernet embarqué et pour recevoir le signal de la deuxième unité de commande ;
- pour déterminer un temps de propagation du signal sur un chemin de connexion vers la deuxième unité de commande ;
- pour déterminer une vitesse maximale du chemin de connexion en fonction du temps de propagation ; et
- pour déterminer un type de support de transmission du chemin de connexion en fonction de la vitesse maximale,

comprend au moins :

- un microprocesseur,
- une mémoire volatile et une mémoire non volatile,
- au moins deux interfaces de communication,
- une minuterie synchronisable,

la mémoire non volatile contient des instructions de programme qui, lorsqu'elles sont exécutées par le microprocesseur,
**caractérisée en ce qu'**au moins un mode de réalisation du procédé selon les revendications 1 à 3 est réalisable et exécutable.

5. Réseau Ethernet embarqué pour un véhicule automobile, comprenant une première unité de commande et une deuxième unité de commande, dans lequel les unités de commande sont connectées entre elles par l'intermédiaire d'au moins un chemin de connexion, et la première unité de commande est configurée selon la revendication 4.

6. Réseau Ethernet selon la revendication 5, **caractérisé en ce que** le réseau Ethernet présente une troisième unité de commande (5) qui est connectée indirectement seulement à la première unité de commande (3) et directement à la deuxième unité de commande par l'intermédiaire d'un troisième chemin de connexion, dans lequel la troisième unité de commande est configurée pour déterminer un temps de propagation d'un troisième signal sur le troisième chemin de connexion, dans lequel la première unité de commande est configurée pour déclencher la détermination du temps de propagation du troisième signal par un message de service à la troisième unité de commande.

7. Produit de programme informatique comprenant des instructions qui, lors de l'exécution du programme par un ordinateur, amènent celui-ci à exécuter le procédé (200) selon une ou plusieurs des revendications 1 à 3.

8. Support lisible par ordinateur sur lequel est stocké le produit de programme informatique selon la revendication 7.

9. Véhicule doté de plusieurs unités de commande selon la revendication 4 comprenant un réseau Ethernet embarqué.

# FIG 1

| | Bus network | Switched network |
|---|---|---|
| No. of PHYs | 4 | 6 |
| Connectors | Fewer connectors with less pins | |
| Cables | less cabling | |
| Resources | shared | exclusively |

EP 4 260 524 B1

FIG 2

FIG 3

# FIG 4

wasted bandwidth because of non-sending (sleeping nodes)

FIG 5

Ermittlung der schlafenden Teilnehmer im Bus

Berechnung der Verkürzung/Veränderung der Beacon-Zeit

Optimierung des Beacon-Versendezeitpunktes

EP 4 260 524 B1

# FIG 6

ALT  | B | | Node 0 | Node 1 | | | | | Node 7 | | B |

NEU  | B | | Node 0 | Node 1 | | | Node 7 | B |

Erreichte Verkürzung
und Optimierung

## FIG 7

Node 6 (inactive) ⌐

Node 4 (inactive) ⌐
Node 3 (inactive) ⌐
Node 2 (inactive) ⌐

| B | | Node 0 | Node 1 | | | | | | Node 5 | | | Node 7 | B |

Node 6 (inactive) ⌐
Node 4 (inactive) ⌐
Node 3 (inactive) ⌐
Node 2 (inactive) ⌐

| B | | Node 0 | Node 1 | Node "5" (jetzt 2) | Node "7" (jetzt 3) | B | | | | |

EP 4 260 524 B1

FIG 8

Ermittlung aller verbundenen Teilnehmer am Bus

Ermittlung der aktiven Teilnehmer am Bus

Berechnung des Beacon-Zyklus

# FIG 9

Ermittlung der Busposition (Node-ID) der schlafenden Knoten

Gibt es Knoten mit einer höheren Node-ID die nicht schlafen?

Ja

Nein

Optimiere die IDs der wachen Knoten

Setzte den Beacon-Zyklus vor den ersten schlafenden Knoten (welcher keine wachen Knoten mehr in der Folge (>ID) hinter sich hat)

EP 4 260 524 B1

# FIG 10

# FIG 11

Ausgangszustand: Node 2 ist inaktiv

Node 2 (inactive)

| B | | Node 0 | Node 1 | | | Node 3 | Node 4 | Node 5 | Node 6 | Node 7 | B |

Optimierung a) Reduzieren der Node IDs (Beibehaltung der Sende-Reihenfolge)

Node 2 (inactive)

| B | Node 0 | Node 1 | Node "3" (jetzt 2) | Node "4" (jetzt 3) | Node "5" (jetzt 4) | Node "6" (jetzt 5) | Node "7" (jetzt 6) | B | |

Optimierung b) Verschieben hinterster Node-IDs nach vorne
(Veränderung der Sende-Reihenfolge)

Node 2 (inactive)

| B | Node 0 | Node 1 | Node "7" (jetzt 2) | Node 3 | Node 4 | Node 5 | Node 6 | B | |

EP 4 260 524 B1

**IN DER BESCHREIBUNG AUFGEFÜHRTE DOKUMENTE**

*Diese Liste der vom Anmelder aufgeführten Dokumente wurde ausschließlich zur Information des Lesers aufgenommen und ist nicht Bestandteil des europäischen Patentdokumentes. Sie wurde mit größter Sorgfalt zusammengestellt; das EPA übernimmt jedoch keinerlei Haftung für etwaige Fehler oder Auslassungen.*

**In der Beschreibung aufgeführte Patentdokumente**

- EP 2585940 A1
- DE 102011085764 A1
- DE 102006003067 A1
- US 2020136993 A1
- US 2005213503 A1